# EUROPEAN PATENT APPLICATION

(11) **EP 2 851 760 A1**
(43) Date of publication of application: **25.03.2015**
(21) Application number: 13185089.3
(22) Date of filing: 19.09.2013
(51) Int. Cl.: G05D 1/02

(54) **Multi-robot system**

(71) Applicant: Rigas Tehniska universitate, Riga 1658 (LV)
(72) Inventor: Nikitenko, Agris, 2118 Lici (LV); Lavendelis, Egons, 1013 Riga (LV); Liekna, Aleksis, 1001 Riga (LV); Ekmanis, Martins, 5001 Orges raj. (LV); Andersone, Ilze, 1002 Riga (LV); Kulikovskis, Guntis, 1058 Riga (LV); Priedniece, Kintija, 4873 Dzelzava (LV)
(74) Representative: Fortuna, Jevgenijs

(57) **Abstract**

A multi-agent system, comprising a server and at least two robots controllably wirelessly connected with the server, where the server contains at least one software agent allocated to each robot, which software agent provides abstraction from the robot being implemented in the hardware and enables to calculate, analyze, optimize and control the implementation of different scenarios of robots operation. The robots with marker sensors, odometers and collision sensors send their location and a (part of a) global map of a to a server with a global map, robots' positions and marker positions, the server updates the global map, plans work of the robots in optimal way, divides the environment in areas allocated to the robots.

## Description

### Technical field

The invention relates to a multi-agent system, designed for optimal performance of set tasks.

### Background Art

There is known a process and multi-agent system (US2011224816), where a solution for division of a number of problems into smaller ones is offered, which are then used for solution of the common task, i.e. finding of such a solution that is close to optimal. The drawback of the known technical solution is limited possibility for simultaneous use of a plurality of system's operation optimizing techniques and relatively long time to obtain a final solution.

There is known a multi-agent system and message transmitting/receiving method thereof (US7860938), wherein message transmission mechanism is provided by the platform, which enables processing of all messages according to their priorities. The drawback of the known technical solution is the necessity to maintain messages priorities queue, which in case of asynchronous system operation may lead to unwanted messages processing delays contrary to asynchronous fully event-based communication.

There is known autonomous multi-platform robot system (US6374155), where it is offered to use of highly specialized robot, which can provide definite services to other robots, in particular, searching the environment and navigation. The system's drawback is the need in availability of specialized robot so limiting the functionality of the rest robots of the group, and the possible scope/range of designing alternatives.

There is known multi-agents cooperating method and system (US6285977), which provides multi-agents software solution, where each agent performs specific functions and enables the user to abstract from the particular implementation. The drawback of the system appears in the physical implementation of robots, where the necessity of exact conformity of an agent to the given robots system impose restrictions in the course of job-sharing and planning an operation of the system, represented by one or more agents.

There is known a distributed multi-agent system (EP2245858), comprising a robot manager and one or more service robots. The robots are configured for communication and cooperation with the manager and may be configured for direct mutual communication and cooperation. The manager includes mapping and navigation module configured to generate and update a map of an environment within which the robots operate, a map, as well as to record movement of robots within the environment and receive robot information with a map of an environment. The drawback of the known system is relatively long time to obtain the final solution and the need in availability of a specialized robot, where in case of robots systems typically having limited computing resources, it will not provide the required performance of the system and its compliance with real-time requirements.

### Disclosure of Invention

The aim of the invention is to offer a multi-agent system, which eliminates drawbacks of the prior art solutions and to optimise robots operation.

The set task is achieved with the proposed multi-agent system, comprising a server and at least two robots being wirelessly controllably connected with the server. The server also contains at least one software agent allocated to each robot, which software agent provides abstraction from the robot being implemented in the hardware and enables to calculate, analyze, optimize and control the implementation of different scenario of robots operation. According to the invention, an agent is a module or program with set operational plan, definite restricted area and which regardless of the robots and the user can perform a variety of task-related activities, such as simultaneously play different specific task strategies, i.e. the first group of agents plays one scenario, while the other group another scenario and then compare, which one has better result. The best result is sent to robots for performance. The agents also enable to abstract from physical aspects of implementation of communication, enabling for different robots simultaneously use different communications standards. On the server at least one database is stored, containing the robots position coordinates in the environment in which robots operate, environment map and map of markers, being installed in an environment. The server contains interconnected modules: a wireless communications module, adapted to transmit and receive robot information, a mapping and navigation module and a robot operations planning and performance controlling module. The mapping and navigation module is adapted for: (a) robots localization and motion tracking in an environment, (b) environment's, where robots operate, map generation and updating by using and consolidating information, received from the robots, operating in said environment, (c) provision robots operating in said environment with information and data used for navigation therein. The module for robots operations planning and performance control is adapted for: (a) virtual division of environment, in which robots operate, in areas, where each area or a number of areas being allocated to a robot to perform a work, taking into account the task of a robot using the information received from the mapping and navigation module, (b) implementing optimal robot work plan, taking into account the robots work task using the information received from the mapping and navigation module; (c) provision robots operating in the environment with information and data used to perform the works. Each robot contains interconnected: at least one global positioning sensor adapted to detect and sense markers being installed in an environment; at least one collision sensor and odometer sensor; communication node, being adapted to receive from and to transmit signals to the server in connection with robots configuration, location in an environment, environment map and performance of the given operation; and memory and computing unit. The memory and computing unit is adapted to: (a) record or synchronize markers databases being received from the server, (b) determine the configuration of the robot, (c) perform robot's self-localization basing on the markers installed in the environment, on markers map received from the server and on signals received from collision and odometer sensor, (d) generate the map of environment or its part in order to send it to the server, (e) adjust robot work task performance.

According to the best implementation of the invention, the server of the proposed system contains a central processor and a graphic processor, where the system is configured so, that environment, where robots operate, map generation, updating and robot operation optimal plan development, using software agents attached to the robots, is carried out on the graphic processor, and the central processor carries out calculation and analysis of robots operations, operations control and implementation control.

### Brief Description of Drawings

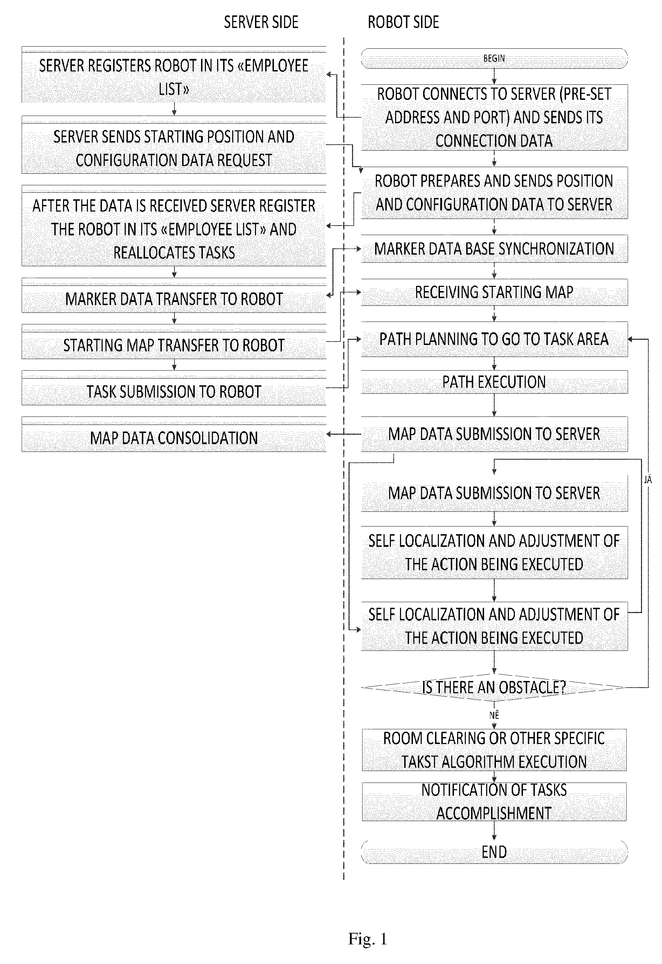

Fig. 1 - shows the algorithm of operation of the robotic system.

The proposed robot system comprises at least two robots, and the central server. The robots can be uniform or different - adapted to perform the given tasks. All robots are controllably connected with the central server, using wireless communication, e.g. WiFi. Each robot on the server has a corresponding to it software agent, having certain autonomy from other software components and which provides abstraction from the robot implemented on the hardware.

The server contains interconnected modules: a wireless communications module adapted to transmit and receive robot information, a mapping and navigation module and robots' operation planning and performance controlling module. The mapping and navigation module is adapted for: (a) robots' localization and motion tracking in an environment, (b) environment, where robots operate, map generation and updating by using and consolidating information received from the robots, operating in said environment, (c) provision robots operating in said environment with information and data used for navigation therein. The module for robots operations planning and performance controlling is adapted for: (a) virtual division of environment, in which robots operate, in areas, where each area or a number of areas being allocated to a robot to perform a work, taking into account the task of a robot and using the information received from the mapping and navigation module, (b) implementing optimal robot work plan, taking into account the task of the robot using the information received from the mapping and navigation module; (c) provision robots operating in the environment with information and data used to perform the works. The server is also adapted to: maintain a list of robots contained in the system; perform tasks set by the user, by division of tasks between robots; provide software service interface with the rest of the system. The server further is adapted to observe task performance and assign the appropriate task to other robots in case of failure of performing the task.

Each robot contains interconnected: at least one global positioning sensor (such as a web camera ,which observes ceiling features and allows to orient in environment basing on the features found) adapted for detection of markers installed in an environment; at least one collision sensor and odometer sensor; communication node, adapted to receive signals from and send signals to the server in connection with the robot configuration, location in an environment, environment map and performance of the given operation; and memory and computing unit. The memory and computing unit is adapted to: (a) record and synchronize markers databases being received from the server, (b) determine the configuration of the robot, (c) perform robot's self-localization (determine the global position - coordinates relative to a 0 point, which is common to all robots) basing on the markers installed in the environment, on markers map received from the server and on signals received from collision and odometer sensor (one of possible localization proceses is described in Nikitenko A., et. al. Single Robot Localisation Approach for Indoor Robotic Systems through Integration of Odometry and Artificial Landmarks. Applied Computer Systems, 10.2478/acss-2013-0006), (d) generate a map of the environment or its part, in order to send it to the server, (e) perform an adjustment of robot work task performance. Thus each robot is adapted to provide robot's interface with the system, provide localization, ensure map drafting functionality and autonomous task given to the robot performance control.

The user interface with the system is provided with the server user interface program, executed by the user of the system on its computer. The server user interface program may be used by the user, to obtain full picture of the system comprising robots contained in the system and their location, as well as to give tasks to the system. The proposed system is configured such to ensure that the user can individually connect to any robot contained in the system, in order to obtain information about robot's current location, sensor indications, commands being performed, and in order to send to robot individual commands.

When the user interface program of the robot server is being actuated, it connects to the server service and receives a list of robots contained in the system, where information about the parameters being necessary to create a connection with the robot, is included. By use of this information, an individual connection with each of robots contained in the system may be created. Robot server user interface program retrieves from the server overall map of the environment, and renders to user opportunity of giving tasks to the system. The task given to the system is sent to the robot server, which processes the received task and then transmits appropriate commands to corresponding robots - task performers.

Before starting to use the proposed system markers are being installed in the environment of robot operation. For example markers are attached to the ceiling and their density has to be no less than 1 marker per 10m² of the space. The robots' cameras being used are adjusted depending on the height of ceiling, i.e. so that the focal length would be appropriate and the algorithm of the recognition of markers would be able to identify them. All markers have to be oriented in certain directions and be located at certain positions. The map of all markers containing data on position and orientation of markers and their image is entered and stored in markers database, located on server or associated with it. It is not necessary to have the environment map ready for operation of the system, because one of the robots functions is to draw up a map in the course of performing work by transmitting the corresponding information to the server. Once the map is created it can be used in the next robots work cycle as a basis for the distribution of work between robots. It is necessary to provide a wireless interface in an environment where robots work between at least robots and the central server.

Before starting the work robots are placed in the respective environment such, that one of the markers would be placed in the vision range or relatively short distance for the determination of the robot's initial global position. According to the invention it is irrelevant to know robots' exact position, because the server is adapted to simultaneous processing of several combination hypotheses and the most possible hypothesis selection. When new evidence comes, which contradicts the hypothesis, the next possible hypothesis is taken, which probability satisfies a certain threshold value. Thus, in the initial stage of the environment exploration an environment map is inaccurate, but after the robots start of work task performance it becomes corresponding to reality.

When the system starts work (Fig. 1), robots connect to the central server and transmit their connection data. The server records the robots in the robot list and sends to each robot a starting position and configuration request. Each robot sends to the server data about its configuration (active 'members' positions) and current status. The server records the data received from the robots, performs current task analysis, division of work and transmits to robots the markers database (including data on the set characteristics installed in the territory of the appropriate task) and a work task (algorithm or work performance schedule) to be performed. During robot work markers database is used for the determination of the robot's position. Robots perform recording or synchronization of markers databases, as well as planning the route for getting to the work area. After the completion of the planning step robots fulfil the route plan and send a part of the environment map to the server. Consolidation of map data received from all robots is performed in the server. The consolidated map is stored in the server and is used for the division of the common work to be performed by robots. While continuing the work robots perform self-localization (define their position), taking into account the previously received marker database and map data from the server, as well as perform adjustment of work performance, including the correction of self-localization errors, by using known algorithms (such as, PID algorithms). When an obstruction occurs in a robot's route the algorithm of robot operation returns to the step of route planning for getting to work area. When the robot arrives in the working area defined on the central server, it starts to perform the given work in accordance with the work performance algorithm previously received from the server. In the course of performing the work, the robot sends map data to the server and periodically performs self-localization. Thus the map is updated continuously, considering also dynamic objects in the space.

After completion of the work the robot sends a message to the server about the performance of the assigned work. Further steps are taken in accordance to the prespecified algorithm; after it is fully performed it is reported to the user about the fulfilment of the work. Optionally, the robot can return to its starting position or following instructions from the server - perform the next task.

Said algorithm can be operated simultaneously and in parallel with all robots. Optionally, additional operations can be performed, necessary for robot "health" assessment and evaluation of the situation of common work performance, in order to timely send robots to charge the batteries, to notify the user of the accidents, to re-plan the common task, etc.

Thus the proposed system is configured such that all data (including ones about robots' state) would be consolidated on the central server, so enabling to perform common work optimization, based on the characteristics of each robot. Optimization is performed by calculating possible operation scenarios, thus, physically not involving robots. The proposed system enables to relieve robots computing elements; to provide the opportunity of consolidation of all data in one place that is accessible to all robots; to enable robot work optimization, performing simulations of work performance in the server, using agents; to simplify the communication.

## Claims

1. A multi-agent system, comprising a server and at least two robots controllably wirelessly connected with the server, where
- at least one database is stored in the server, which database containing robots' position coordinates in the environment, where robots operate, environment map and map of markers installed in an environment; where server comprising: wireless communications module adapted to transmit and receive robot information; mapping and navigation module, adapted to: (a) robot localization and motion tracking in an environment, (b) generation and updating map of an environment, where robots operate, by using and consolidating information, received from the robots, operating in said environment, (c) provision robots operating in said environment with information and data used for navigation therein;
- each robot containing interconnected: at least one global positioning sensor, adapted to receive markers being installed in an environment; at least one collision sensor and odometer sensor; communication node, adapted to receive from and to transmit signals to the server in connection with robots configuration, location in an environment, environment map and performance of the given operation; and memory and computing unit adapted to: (a') record and synchronize markers databases being received from the server, (b') determine the configuration of the robot, (c') perform robot's self-localization basing on the markers installed in the environment, on markers map received from the server and on signals received from the collision and odometer sensor, (d') generate the map of an environment or its part in order to send it to the server, (e) adjust robot work task performance, **characterized in that** the server further contains at least one software agent allocated to each robot, which provides abstraction from the robot being implemented in the hardware and enables to calculate, analyze, optimize and control the implementation of different scenario of robots operation, wherein the server further containing a wireless communications module, and mapping and navigation module connected with the robot operations planning and performance controlling module, being adapted to: (a") virtual division of an environment, in which robots operate, in areas, where each area or a number of areas being allocated to a robot to perform a work, taking into account the task of a robot using the information received from the mapping and navigation module, (b") implementing optimal robot work plan, taking into account the robots work task using the information received from the mapping and navigation module; (c") provision robots operating in the environment with information and data, which are used to perform the works.

2. The system according to claim 1, where the server contains central processor and graphic processor, where the system is configured so, that environment's, where robots operate, map generation, updating and robot operation optimal plan development, using software agents attached to the robots, is carried out on the graphic processor, and the central processor carries out calculation and analysis of robots operations, operations control and implementation control.

3. The system according to claim 1 or 2, where the server is arranged with the possibility to be connected to the user's computer, where the user interface with the system is provided with the server user interface program, executed by the user of the system on its computer.

4. The system according to any of the preceding claims, being configured with the possibility for user individually connect to any of the robots existing in the system in order to obtain information about its current location, sensor indications, command being performed, and in order to send to robot individual commands.
